# EUROPÄISCHE PATENTSCHRIFT

(11) **EP 1 744 922 B1**
(45) Veröffentlichungstag und Bekanntmachung des Hinweises auf die Patenterteilung: **15.05.2013**
(21) Anmeldenummer: 05738772.2
(22) Anmeldetag: 31.03.2005
(51) Int. Cl.: B60J 7/185

(54) **VERSCHLUSSVORICHTUNG FÜR EIN VERDECK EINES CABRIOLET-KRAFTFAHRZEUGES**
CLOSING DEVICE FOR A FOLDING TOP OF A CONVERTIBLE MOTOR VEHICLE
DISPOSITIF DE FERMETURE DESTINE A LA CAPOTE D'UNE AUTOMOBILE DECAPOTABLE

(30) Priorität: 02.04.2004 DE 202004005257 U
(43) Veröffentlichungstag der Anmeldung: 24.01.2007
(73) Patentinhaber: Valmet Automotive Oy, 23500 Uusikaupunki (FI)
(72) Erfinder: RUSSKE, Klaus, 49143 Bissendorf (DE); SELLE, Heinrich, 32549 Bad Oeynhausen (DE); METZNER, Birgit, 49205 Hasbergen (DE)
(74) Vertreter: Kronthaler, Schmidt & Coll.
(86) Internationale Anmeldenummer: PCT/DE2005/000582
(87) Internationale Veröffentlichungsnummer: WO 2005/100066

(56) Entgegenhaltungen:
- EP-A- 1 256 475
- DE-A1- 10 211 624
- US-A- 5 154 479

## Beschreibung

Die Erfindung betrifft eine Verschlussvorrichtung zum Verschließen eines Verdecks eines Cabriolet-Kraftfahrzeugs, sowie ein Verdeck eines Cabriolet-Kraftfahrzeugs mit einer derartigen Verschlussvorrichtung.

Bei Cabriolet-Fahrzeugen werden in der Praxis Verschlussvorrichtungen eingesetzt, um das Cabriolet-Verdeck im geschlossenen Zustand an einem üblicherweise einen Windschutzscheibenrahmen darstellenden Karosserierahmenteil festzulegen. Dabei sind manuelle und vollautomatische Verschlussvorrichtungen bekannt

Eine manuell zu bedienende Verschlussvorrichtung für ein Verdeck eines Cabriolet-Fahrzeugs ist z. B. aus der EP 0 850 793 B1 bekannt, wobei diese Verschlussvorrichtungen in seitlichen Bereichen des Cabriolet-Verdecks oder des Windschutzscheibenrahmens angeordnete Verschlusselemente und zwischen den Verschlusselementen ein mittig angeordnetes Betätigungsorgan aufweist, um das Cabriolet-Verdeck an dem Rahmenteil festzulegen. Dazu ist zwischen den Verschlusselementen und dem Betätigungsorgan eine Mechanik vorgesehen, so dass in Abhängigkeit der Verdrehung des Betätigungsorgans die Verschlusselemente mit verschlussgegenelementen in Eingriff kommen und somit das Cabriolet-Verdeck festlegen oder diese freigeben und somit eine Öffnungsbewegung des Cabriolet-Verdecks ermöglichen.

Bei einer solchen Verschlussvorrichtung muss die Bedienung des Betätigungsorgans zum Festlegen des Verdecks in einer vorgegebenen Position des Verdecks erfolgen, damit die Verschlusselemente mit den Gegenverschlusselementen in Eingriff kommen, und gleichzeitig muss die Verdrehung des Betätigungsorgans mit einem notwendigen Kraftaufwand in eine vorgebbare Endstellung erfolgen, damit das Cabriolet-Verdeck sicher festgelegt ist. Zum Entriegeln ist entsprechend eine Verdrehung des Betätigungsorgans notwendig.

Die manuellen Betätigungsvorgänge bei einer Verschlussvorrichtung für Cabriolet-Verdecke nach dem oben genannten Stand der Technik erfordern somit die Verdrehung des Betätigungsorgans, die durch eine manuelle Bewegung zu erzielen ist. Für den Bediener des Betätigungsorgans wird diese Drehbewegung durch eine Drehbewegung der Hand ausgeführt, so dass die verriegelung und die Entriegelung des Cabriolet-Verdecks jeweils einen merklichen Betätigungsaufwand erfordert, der als unkomfortabel empfunden werden kann und einen gegebenenfalls erheblichen Kraftaufwand für die Bedienung voraussetzt.

Weiterhin sind aus der Praxis vollautomatisch schließende Cabriolet-Verdecke bekannt. Hierbei ist es problematisch, dass aufgrund der Toleranzen der Verdeckmechanik oder des Verdeckmaterials, insbesondere bei einem Verdeckstoff, oder aufgrund von Spannungen im Verdeck die Schließstellung oder gegebenenfalls eine Vorschließstellung von Fahrzeug zu Fahrzeug und auch bei. einem Fahrzeug selbst variieren kann. Somit ist ein Ausgleich dieser Toleranzen notwendig, welcher den bei einem vollautomatischen Verschlussmechanismus ohnehin großen konstruktiven Aufwand weiter erhöht. Das Dokument DE 10211624 A1 offenbart den Oberbegriff des Anspruchs 1

Es ist daher Aufgabe der vorliegenden Erfindung, eine Verschlussvorrichtung zu schaffen, die gegenüber den bekannten Verschlussvorrichtungen komfortabel bedient werden kann, einen geringen Betätigungsaufwands erfordert und unter einem geringeren Kraftaufwand erfolgen kann. Weiterhin ist es die Aufgabe der Erfindung, eine Verschlussvorrichtung zu schaffen, die hinsichtlich der Toleranzen des Cabriolet-Verdecks möglichst unempfindlich ist.

Erfindungsgemäß wird diese Aufgabe gelöst mit einer Verschlussvorrichtung zum Verschließen eines Verdecks eines Cabriolet-Kraftfahrzeuges an einem Karosserierahmenteil; wobei dem Verdeck wenigstens ein Verschlusselement und dem Karosserierahmenteil wenigstens ein Verschlussgegenelement zugeordnet ist, welche mittels einer motorischen Antriebseinheit in Eingriff bringbar sind; wobei das Verdeck ein Griffelement aufweist, mittels dem das Verdeck manuell zwischen einer zum Karosserierahmenteil beabstandeten Vorschließstellung und einer Fangstellung, in der das Verdeck verschließbar ist, bewegbar ist; und wobei die Verschlussvorrichtung einen Sensor umfasst, mittels dem die Einnahme der Fangstellung des Verdecks detektierbar ist und der Signale an eine Steuereinheit der Antriebseinheit ausgibt.

Das Verdeck kann in die bzw. aus der Vorschließstellung beispielsweise elektrisch oder hydraulisch automatisiert oder auch manuell überführbar sein. Zum Schließen ist das Verdeck in die Fangstellung zu positionieren, welche vorgebbar ist und sowohl eine die Antriebseinheit aktivierende Stellung unmittelbar vor Erreichen einer Anschlagposition an dem Karosserierahmenteil als auch die Anschlagposition selbst sein kann.

Zum manuellen Verschließen des Verdecks muss lediglich die Dachspitze des Verdecks manuell bis in die Fangstellung gezogen werden. Zweckmäßigerweise ist dazu das Griffelement in der Dachspitze des Verdecks oder in einer Verkleidung der Dachspitze des Verdecks vorgesehen. Das Griffelement ist beispielsweise eine Griffschale, ein vorzugsweise nicht drehbarer Handgriff oder ähnliches. Dadurch wird es erlaubt, das Verdeck einfach zu schließen.

Bei Erreichen der Fangstellung detektiert dies der dazu vorgesehene Sensor und gibt vorzugsweise ein entsprechendes Signal an eine Steuereinheit der Antriebseinheit aus, welche wiederum aufgrund dieses Signals das zumindest eine Verschlusselement bzw. Verschlussgegenelement betätigt.

Mit der erfindungsgemäßen Verschlussvorrichtung wird vorteilhafterweise gegenüber bekannten manuellen Verschlussvorrichtungen eine einfachere, erleichterte Verriegelung des Cabriolet-Verdecks erreicht, da das Verdeck lediglich manuell von einer Vorschließstellung in die Fangstellung herunter gezogen werden muss, wobei die bisher erforderliche und teils sehr kraftaufwändige Drehbewegung einer Betätigungshand entfällt. Die Bedienung erfordert somit gegenüber bekannten, rein mechanischen Lösungen mit verdrehbarem Betätigungsorgan einen erheblich reduzierten Kraftaufwand seitens der Bedienperson.

Gleichzeitig wird gegenüber vollautomatischen Lösungen der Vorteil des geringen konstruktiven Aufwands und des einfachen Toleranzausgleichs gewahrt.

Gemäß einer bevorzugten Ausgestaltung der Erfindung sind zwei symmetrisch zu einer Fahrzeugmittelachse angeordnete Verschlusselemente an dem Verdeck und hiermit korrespondierende Verschlussgegenelemente dem Karosserierahmenteil vorgesehen.

Erfindungsgemäß umfasst die Vorrichtung weiterhin ein Betätigungselement, aufgrund dessen Betätigung zumindest im festgelegten Zustand des Verdecks die Antriebseinheit zum Betätigen des zumindest einen Verschlusselements zum Lösen des Verdecks ansteuerbar ist. Hierzu kann ein manuell einfach betätigbares Betätigungselement vorgesehen sein, wie beispielsweise ein Druckknopf, Kippschalter, Berührungssensor oder dergleichen. Durch die Betätigung des Betätigungselementes wird der Steuereinheit ein Signal übermittelt, woraufhin die Antriebseinheit angesteuert wird, um die Verschlusselemente zu betätigen und die Verschlusselemente mit den Verschlussgegenelementen außer Eingriff zu bringen, womit die Verschlussvorrichtung entriegelt wird. In dem so erreichten Zustand kann dann das Cabriolet-Verdeck manuell oder automatisiert vollständig geöffnet werden.

Der erfindungsgemäß vorgesehene Sensor zum Detektieren des Erreichens der Fangstellung kann ein Schalter, wie ein Kontaktschalter oder ein Microschalter, sein. Auch kann der Sensor bei einem anderen Ausführungsbeispiel der Erfindung als ein berührungslos arbeitender Sensor oder Schalter, beispielsweise als REED-Schalter oder optischen Sensor, ausgebildet sein.

Die erfindungsgemäß vorgesehene Antriebseinheit betätigt die Verschlusselemente, indem sie diese beispielsweise mittels einer mechanischen Verbindungsvorrichtung verschwenkt. Die Vorrichtung kann dazu vorteilhaft als eine elektrisch antreibbare Einheit ausgebildet sein. Eine solche Einheit ist vorzugsweise ein Elektromotor. Im Falle, dass die Verschlussvorrichtung zwei Verschlusselemente aufweist, ist dem Elektromotor zweckmäßigerweise ein Getriebe nachgeschaltet, welches die Drehbewegung der Motorausgangswelle in eine Verlagerungsbewegung zweier mechanischer Verbindungsvorrichtungen umwandelt.

Gemäß einem weiteren Ausführungsbeispiel der Erfindung kann die Antriebseinheit der Verschlussvorrichtung als eine hydraulisch angetriebene Einheit ausgestaltet sein. Dabei kann die hydraulische Antriebseinheit ein Ausgangselement aufweisen, das mittels Verbindungsvorrichtungen die Verschlusselemente betätigt. Dabei kann ebenso ein Getriebe vorgesehen sein, welches die Betätigungsbewegung eines Ausgangselementes der Antriebseinheit in eine Verlagerungsbewegung zweier mechanischer Verbindungsvorrichtungen umwandelt. Auch können zwei Ausgangselemente der Antriebseinheit vorgesehen sein, welche jeweils eine Verschlussvorrichtung mittels einer Verbindungsvorrichtung betätigen.

Es ist zweckmäßig, wenn die Antriebseinheit in die Verschlussvorrichtung integriert ist, wobei sie wiederum vorteilhafterweise in das Verdeck integriert ist, wenn sie die Verschlusselemente antreibt, und in das Karosserierahmenteil integriert ist, wenn sie die Verschlussgegenelemente antreibt. Vorzugsweise ist.die Antriebseinheit bei einer Vorrichtung mit zwei Verschlusselementen und Verschlussgegenelementen zwischen den Verschlusselementen bzw. Verschlussgegenelementen angeordnet.

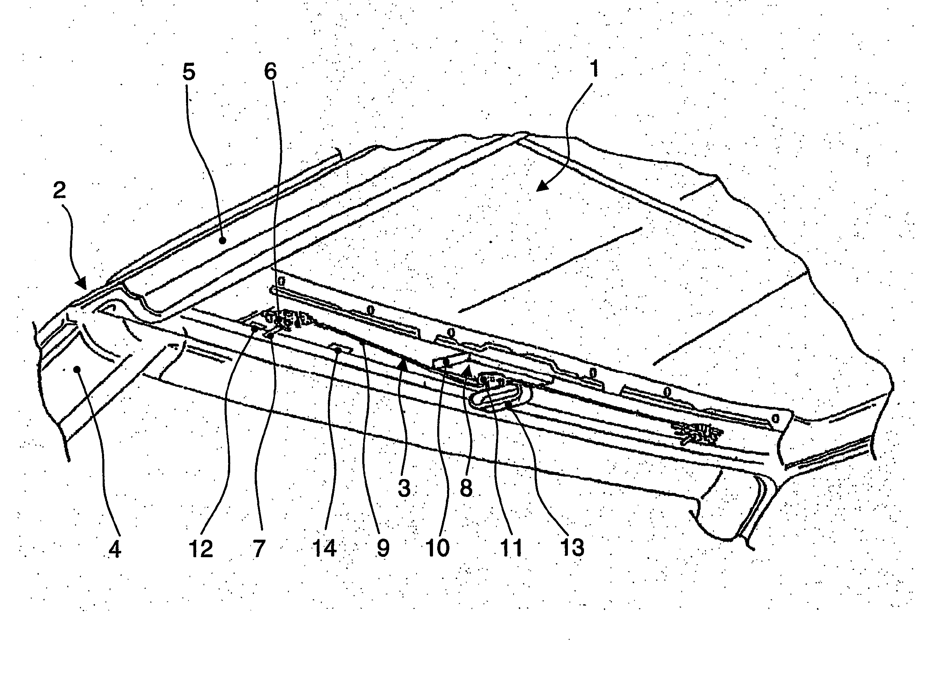

Weitere Vorteile und vorteilhafte Ausgestaltungen des Gegenstandes nach der Erfindung sind der Beschreibung, der Zeichnung und den Schutzansprüchen entnehmbar.

Ein Ausführungsbeispiel eines Verdecks nach der Erfindung ist in der Zeichnung schematisch vereinfacht dargestellt und wird in der nachfolgenden Beschreibung näher erläutert.

Die einzige Figur der Zeichnung zeigt in einer schematischen, dreidimensionalen Darstellung einen Ausschnitt eines Verdecks eines Cabriolet-Kraftfahrzeuges mit einer vereinfacht gezeigten Verschlussvorrichtung gemäß der Erfindung.

Bezug nehmend auf die Figur der Zeichnung ist ein Verdeck 1 eines nur ausschnittsweise angedeuteten Cabriolet-Kraftfahrzeuges 2 in einem geschlossenen Zustand gezeigt, bei dem es mittels einer Verschlussvorrichtung 3 an einem hier einen Windschutzscheibenrahmen darstellenden Karosserierahmenelement 4 festgelegt ist.

Dabei weist die Verschlussvorrichtung 3 zwei an einer Dachspitze bzw. Verdeckvorderkante 5 seitlich symmetrisch bezüglich einer Fahrzeugmittellängsachse angeordnete Verschlusselemente 6 auf, die mit nur prinzipmäßig in der Figur angedeuteten, in der Praxis hinter einer Verkleidung liegenden Verschlussgegenelementen 7 an dem Windschutzscheibenrahmen 4 in Eingriff bringbar sind, um das Verdeck an dem Windschutzscheibenrahmen 4 festzulegen.

Weiterhin weist die Verschlussvorrichtung 3 eine zentral zwischen den Verschlusselementen 6 angeordnete Antriebseinheit 8 auf, welche vorliegend zum Antrieb der Verschlusselemente 6 vorgesehen ist.

Es versteht sich, dass in einer anderen Ausführungsvariante anstelle eines Antriebs der Verschlusselemente auch ein Antrieb der Verschlussgegenelemente vorgesehen sein kann.

Die Antriebseinheit 8 wird vorzugsweise elektrisch oder elektronisch gesteuert. Hierzu ist eine in der Figur nicht näher dargestellte elektronische Steuereinheit vorgesehen, die vorliegend in die Verschlussvorrichtung 3 integriert ist, jedoch in einem weiteren erfindungsgemäßen Ausführungsbeispiel auch separat angeordnet sein kann.

zwischen der Antriebseinheit 8 und den Verschlusselementen 6 sind jeweils Verbindungselemente 9 vorgesehen, um die Antriebsverbindung zwischen den Verschlusselementen 6 und der Antriebseinheit 8 durch eine mechanische Kopplung zu erreichen. Die Verbindungselemente 9 sind vorliegend je als gelenkig gelagerte Verbindungsstange ausgebildet, jedoch können diese in weiteren Ausführungen auch als anderes Antriebsgestänge, Seilzüge oder ähnliches ausgebildet sein.

Im gezeigten Ausführungsbeispiel ist die Antriebseinheit 8 mit einem Elektromotor 10 ausgebildet, jedoch kann die Antriebseinheit alternativ z. B. auch als hydraulische Einheit ausgebildet sein.

Vorliegend ist einer Motorabtriebswelle des Elektromotors 10 ein Getriebe 11 nachgeordnet, welches gleichzeitig die Drehzahl des Elektromotors 10 vorzugsweise untersetzt und eine Drehbewegung der Abtriebswelle in eine Axialbewegung der Verbindungselemente 9 transformiert. Vorzugsweise erfolgt dies mittels eines Untersetzungsgetriebes, wie eines Schneckengetriebes oder Zahnradgetriebes, das die Drehbewegung der Motorabtriebswelle auf ein Schneckenzahnrad oder Abtriebszahnrad überträgt, an welchem jeweils gelenkige Anlenkungen der beiden Verbindungselemente 9 vorgesehen sind, um aus der Drehbewegung des Abtriebsrades eine im wesentlichen axiale Bewegung der Verbindungselemente 9 zu bewirken.

Die Verschlusselemente 6 stellen mit den Verbindungselementen bzw. Verbindungsstangen 9 wirkverbundene, hakenartige Riegelelemente dar, welche bei Verdrehung bzw. Verkippung in einer Fangstellung des Verdecks 1 mit den hier bolzenartig ausgebildeten Verschlussgegenelementen 7 in Eingriff bringbar sind. Die Verkippung wird dabei dadurch erreicht, dass bei einer rotatorischen Bewegung der Motorausgangswelle die Verbindungselemente 9 in axialer Richtung verlagert werden, wobei die mit den Verbindungselementen 9 verbundenen Verschlusselemente bzw. Riegelelemente 6 um eine Achse verkippt bzw. verdreht werden, um mit den Verschlussgegenelementen 7 in Eingriff zu kommen.

Die Anlenkung der Verbindungselemente 9 an den Riegelelementen 6 kann dabei in an sich bekannter Weise erfolgen, beispielsweise - wie in der EP 0 850 793 B1 beschrieben - über einen Hebelarm, an dem sowohl das zugeordnete Verbindungselement 9 als auch das zugeordnete Verschluss- bzw. Riegelelement 6 mittels Gelenken beweglich gelagert sind. Die auf die Verbindungselemente 9 durch die Motorabtriebswelle übertragene Zugkraft und deren Einwirkung über die Hebel auf die Verschlusselemente 6 bewirkt das Ineingriffbringen mit den Verschlussgegenelementen 7.

Die Steuereinheit der Antriebseinheit 8 ist mit einem Sensor 12 signalverbunden, welcher detektiert, ob das Cabriolet-Verdeck 1 eine vorgebbare Stellung eingenommen hat, welche als Fangstellung definiert ist. Wird das Erreichen der Fangstellung durch das Verdeck detektiert, wird dies durch den Sensor 12 erfasst und von der Steuereinheit verarbeitet. Die Steuereinheit steuert daraufhin die Antriebseinheit 8 an, um die Verschlusselemente 6 mit den Verschlussgegenelementen 7 in Eingriff zu bringen und das Verdeck 1 an dem Windschutzscheibenrahmen 4 festzulegen.

Der Ablauf eines Schließvorganges des Verdecks 1 erfolgt damit wie folgt: Das Verdeck 1 wird aus einer geöffneten Stellung in eine Vorschließstellung überführt. Dieses Schließen kann je nach Ausführung des Cabriolet-Verdecks 1 manuell oder auch automatisiert erfolgen. In der Vorschließstellung ist die Dachspitze bzw. Verdeckvorderkante 5 mit einem vorgebbaren Abstand gegenüber der rückwärtigen Kante des Windschutzscheibenrahmens 4 angehoben.

Soll das Verdeck 1 ganz geschlossen und festgelegt werden, wird das Verdeck 1 mit der Dachspitze 5 manuell z. B. unter Überwindung eines Totpunktes an den Windschutzscheibenrahmen 4 geführt, bis die Fangstellung eingenommen ist. Das Erreichen der Fangstellung detektiert der mit der Steuereinheit der Antriebseinheit 8 in Signalverbindung stehende Sensor 12, woraufhin die Steuereinheit die Antriebseinheit 8 ansteuert, um die Verschlusselemente 6 zum Verriegeln zu betätigen. Das Verdeck 1 wird dadurch festgelegt.

Zum manuellen Schließen des Verdecks 1 in die Fangstellung weist das Verdeck 1 ein Griffelement 13 auf, das hier als Handgriff ausgebildet ist und in einfachster Ausführung auch als Griffschale ausgebildet sein kann.

Zur Entriegelung des Verdecks 1 umfasst die Verschlussvorrichtung 1 ein Betätigungselement 14. Dieses Betätigungselement 14 ist vorliegend als Druckschalter ausgebildet und steht ebenfalls mit der Steuereinheit der Antriebseinheit 8 in Signalverbindung. Bei einer Betätigung des Betätigungselements 14 wird bei Empfang des Betätigungssignals die Antriebseinheit 8 angesteuert, um durch Antrieb der Verschlusselemente 6 das Cabriolet-Verdeck 1 zu lösen, indem die Verschlusselemente 6 mit den Verschlussgegenelementen 7 außer Eingriff gelangen.

Hierzu wird die Motorabtriebswelle in an dem Windschutzscheibenrahmen 4 festgelegten Zustand in die entgegengesetzte Drehrichtung gedreht oder es wird eine derartige Drehbewegung über das Getriebe 11 eingestellt, wobei eine im Wesentlichen in axialer Richtung wirkende Schubkraft auf die Verbindungselemente 9 ausgeübt wird, die eine Verkippung der Verschluss- bzw. Riegelelemente 6 bewirkt, um außer Eingriff mit den Verschlussgegenelementen 7 zu gelangen. Das Verdeck 1 kann anschließend manuell oder automatisiert vollständig geöffnet werden.

### Bzugszeichen

| | |
|---|---|
| 1 | Verdeck |
| 2 | Cabriolet-Kraftfahrzeug |
| 3 | Verschlussvorrichtung |
| 4 | Karosserierahmenelement, Windschutzscheibenrahmen |
| 5 | Dachspitze, Verdeckvorderkante |
| 6 | Verschlusselement, Riegelelement |
| 7 | Verschlussgegenelement |
| 8 | Antriebseinheit |
| 9 | Verbindungselement |
| 10 | Elektromotor |
| 11 | Getriebe |
| 12 | Sensor |
| 13 | Griffelement |
| 14 | Betätigungselement |

## Patentansprüche

1. Verschlussvorrichtung zum Verschließen eines Verdecks (1) eines Cabriolet-Kraftfahrzeuges (2) an einem Karosserierahmenteil (4); wobei dem Verdeck (1) wenigstens ein Verschlusselement (6) und dem Karosserierahmenteil (4) wenigstens ein Verschlussgegenelement (7) zugeordnet ist, welche mittels einer motorischen Antriebseinheit (8) in Eingriff bringbar sind, **dadurch gekennzeichnet, dass** das Verdeck (1) ein Griffelement (13) aufweist, mittels dem das Verdeck (1) manuell zwischen einer zum Karosserierahmenteil (4) beabstandeten Vorschließstellung und einer Fangstellung, in der das Verdeck (1) verschließbar ist, bewegbar ist; und wobei die Verschlussvorrichtung (3) einen Sensor (12) umfasst, mittels dem die Einnahme der Fangstellung des Verdecks (1) detektierbar ist und der Signale an eine Steuereinheit der Antriebseinheit (8) ausgibt.

2. Verschlussvorrichtung nach Anspruch 1, **dadurch gekennzeichnet, dass** der Sensor (12) bei Erreichen der vorgebbaren Fangstellung des Verdecks (1) ein Signal generiert und die Steuereinheit aufgrund des erfassten Signals des Sensors (12) die Antriebseinheit (8) zur Betätigung des zumindest einen Verschlusselements (6) und/oder Verschlussgegenelements (7) zur Festlegung des Verdecks (1) ansteuert.

3. Verschlussvorrichtung nach Anspruch 1 oder 2, **dadurch gekennzeichnet, dass** zwei Verschlusselemente (6) an dem Verdeck (1) und zwei Verschlussgegenelemente (7) an dem Karosserierahmenteil (4) vorgesehen sind.

4. Verschlussvorrichtung nach einem der Ansprüche 1 bis 3, **dadurch gekennzeichnet, dass** diese ein Betätigungselement (14) umfasst, aufgrund dessen Betätigung zumindest im festgelegten Zustand des Verdecks ein Signal erzeugt und die Antriebseinheit (8) zum Lösen des Verdecks (1) angesteuert wird.

5. Verschlussvorrichtung nach einem der Ansprüche 1 bis 4, **dadurch gekennzeichnet, dass** zum Lösen des Verdecks (1) die Betätigung des wenigstens einen Verschlusselements (6) derart erfolgt, dass das Verschlusselement (6) mit dem zugeordneten Verschlussgegenelement (7) außer Eingriff bringbar ist.

6. Verschlussvorrichtung nach einem der Ansprüche 1 bis 5, **dadurch gekennzeichnet, dass** der Sensor (12) als ein Schalter, insbesondere als ein Microschalter, ausgebildet ist.

7. Verschlussvorrichtung nach einem der Ansprüche 1 bis 6, **dadurch gekennzeichnet, dass** die Antriebseinheit (8) als eine elektrisch antreibbare Einheit, insbesondere mit einem Elektromotor (10), ausgebildet ist.

8. Verschlussvorrichtung nach einem der Ansprüche 1 bis 7, **dadurch gekennzeichnet, dass** die Antriebseinheit eine hydraulisch angetriebene Einheit ist.

9. Verschlussvorrichtung nach einem der Ansprüche 1 bis 8, **dadurch gekennzeichnet, dass** die Antriebseinheit (8) in die Verschlussvorrichtung (3) integriert ist.

10. Verschlussvorrichtung nach einem der Ansprüche 1 bis 9, **dadurch gekennzeichnet, dass** die Antriebseinheit in das Karosserierahmenteil integriert ist.

11. Verdeck eines Cabriolet-Kraftfahrzeuges mit einer Verschlussvorrichtung (3) zum lösbaren Festlegen des Verdecks (1) an einem Karosserierahmenteil (4) gemäß einem der vorhergehenden Ansprüche.

## Claims

1. A closing device for closing a hood (1) of a convertible vehicle (2) on a vehicle body frame part (4), with at least one closing element (6) being assigned to the hood (1) and at least one complementary closing element (7) being assigned to the vehicle body frame part (4), both of which elements can be brought into engagement by means of a motor drive unit (8), **characterised in that** the hood (1) comprises a handle element (13), by means of which the hood (1) can be moved manually between a pre-closing position at a distance from the vehicle body frame part (4) and a catch position in which the hood (1) can be closed; said closing device (3) comprising a sensor (12) which can detect when the hood (1) occupies the catch position and which outputs signals to a control unit of the drive unit (8).

2. The closing device according to claim 1, **characterised in that** the sensor (12) generates a signal as soon as the hood (1) reaches the pre-definable catch position and the control unit controls the drive unit (8) on the basis of the signal acquired from the sensor (12) to actuate the at least one closing element (6) and/or complementary closing element (7) so as to fix the hood (1).

3. The closing device according to claim 1 or 2, **characterised in that** two closing elements (6) are provided on the hood (1) and two complementary closing elements (7) are provided on the vehicle body frame part (4).

4. The closing device according to any one of claims 1 to 3, **characterised in that** it comprises an actuating element (14) due to whose actuation a signal is generated, at least in the fixed state of the hood, and the drive unit (8) is controlled to release the hood (1).

5. The closing device according to any one of claims 1 to 4, **characterised in that**, in order to release the hood (1), the at least one closing element (6) is actuated in a manner allowing the closing element (6) to be disengaged from its assigned complementary closing element (7).

6. The closing device according to any one of claims 1 to 5, **characterised in that** the sensor (12) is provided as a switch, in particular a micro switch.

7. The closing device according to any one of claims 1 to 6, **characterised in that** the drive unit (8) is provided as an electrically driven unit, in particular with an electric motor (10).

8. The closing device according to any one of claims 1 to 7, **characterised in that** the drive unit is a hydraulically driven unit.

9. The closing device according to any one of claims 1 to 8, **characterised in that** the drive unit (8) is integrated into the closing device (3).

10. The closing device according to any one of claims 1 to 9, **characterised in that** the drive unit is integrated into the vehicle body frame part.

11. A hood for a convertible vehicle comprising a closing device (3) for the releasable fixing of the hood (1) to a vehicle body frame part (4) according to any one of the preceding claims.

## Revendications

1. Dispositif de fermeture destiné à fermer une capote (1) d'un véhicule cabriolet (2) sur un élément de cadre de carrosserie (4), dans lequel dispositif au moins un élément de fermeture (6) est conjugué à la capote (1) et au moins un élément de fermeture complémentaire (7) est conjugué à l'élément de cadre de carrosserie (4), tous ces deux éléments pouvant être mis en prise au moyen d'une unité d'entraînement à moteur (8), **caractérisé en ce que** la capote (1) comprend un élément de poignée (13) permettant le déplacement manuel de la capote (1) entre une position avant la fermeture à distance de l'élément de cadre de carrosserie (4) et une position d'accrochage permettant la fermeture de la capote (1); ledit dispositif de fermeture (3) comprenant un capteur (12) qui permet de détecter quand la capote (1) occupe la position d'accrochage et qui émet des signaux à une unité de commande de l'unité d'entraînement (8).

2. Dispositif de fermeture selon la revendication 1, **caractérisé en ce que**, la capote (1) ayant atteint la position d'accrochage que l'on peut définir au préalable, le capteur (12) génère un signal et l'unité de commande utilise le signal saisi du capteur (12) pour commander l'unité d'entraînement (8) pour actionner ledit au moins un élément de fermeture (6) et/ou élément de fermeture complémentaire (7) afin de fixer la capote (1).

3. Dispositif de fermeture selon la revendication 1 ou 2, **caractérisé en ce que** l'on prévoit deux éléments de fermeture (6) sur la capote (1) et deux éléments de fermeture complémentaires (7) sur l'élément de cadre de carrosserie (4).

4. Dispositif de fermeture selon l'une quelconque des revendications 1 à 3, **caractérisé en ce qu'**il comprend un élément d'actionnement (14) dont l'actionnement a pour effet de générer un signal, au moins à l'état fixe de la capote, et de commander l'unité d'entraînement (8) pour desserrer la capote (1).

5. Dispositif de fermeture selon l'une quelconque des revendications 1 à 4, **caractérisé en ce qu'**afin de desserrer la capote (1), l'au moins un élément de fermeture (6) est actionné de manière à permettre le desserrage de l'élément de fermeture (6) de son élément de fermeture complémentaire (7) conjugué.

6. Dispositif de fermeture selon l'une quelconque des revendications 1 à 5, **caractérisé en ce que** le capteur (12) est réalisé sous la forme d'un interrupteur, notamment un microrupteur.

7. Dispositif de fermeture selon l'une quelconque des revendications 1 à 6, **caractérisé en ce que** l'unité d'entraînement (8) est réalisée en tant qu'unité à entraînement électrique, notamment à moteur électrique (10).

8. Dispositif de fermeture selon l'une quelconque des revendications 1 à 7, **caractérisé en ce que** l'unité d'entraînement est une unité à entraînement hydraulique.

9. Dispositif de fermeture selon l'une quelconque des revendications 1 à 8, **caractérisé en ce que** l'unité d'entraînement (8) est intégrée dans le dispositif de fermeture (3).

10. Dispositif de fermeture selon l'une quelconque des revendications 1 à 9, **caractérisé en ce que** l'unité d'entraînement est intégrée dans l'élément de cadre de carrosserie.

11. Capote pour un véhicule cabriolet, comprenant un dispositif de fermeture (3) pour la fixation amovible de la capote (1) sur un élément de cadre de carrosserie (4) selon l'une quelconque des revendications précédentes.
